# EUROPEAN PATENT APPLICATION

(11) **EP 4 651 079 A1**
(43) Date of publication of application: **19.11.2025**
(21) Application number: 25176075.7
(22) Date of filing: 13.05.2025
(51) Int. Cl.: G06T 7/30

(54) **METHODS, COMPUTER PROGRAM PRODUCTS AND SYSTEMS FOR PROVIDING AN ASSESSMENT MEDIA FOR USE IN ASSESSING ACCURACY OF A GEOSPATIAL DATASET**

(30) Priority: 16.05.2024 SE 2450535
(71) Applicant: Maxar International Sweden AB, 582 13 Linköping (SE)
(72) Inventor: BEJERYD, Johan, LINKÖPING (SE); ISAKSSON, Folke, Sturefors (SE); ANDERSSON, Ingmar, Lindome (SE); NYGREN, Ola, Linghem (SE); BECKMAN, Thomas, Linköping (SE)
(74) Representative: Zacco Sweden AB

(57) **Abstract**

The present disclosure relates to a method (100) for providing an assessment media for use in assessing accuracy of a geospatial dataset. The method comprises obtaining (S100) an ordered set of reference media, the ordered set comprising a first and a last reference media, the first reference media comprising one or more identifiable Ground Control Point, GCP, and generating (S200) the assessment media based on establishing (S205) respective links from each GCP of the first reference media to a corresponding point in the last reference media.

## Description

### TECHNICAL FIELD

The present disclosure relates to accuracy assessment of geospatial datasets.

### BACKGROUND ART

Generation of geospatial datasets often involves 3D reconstruction of satellite imagery. The satellite imagery may comprise a set of stereo image pairs that are registered to each other and thereafter 3D reconstructed to form the geospatial dataset, e.g. a 3D model. Sources of errors in the 3D model can be found in both the positional accuracy of the images, as well as the iterative determination of camera parameters during the 3D reconstruction. There is a need in the art to determine the accuracy of the generated dataset.

### SUMMARY OF THE INVENTION

The present disclosure relates to a method for providing an assessment media for use in assessing accuracy of a geospatial dataset. The method comprises obtaining an ordered set of reference media. The ordered set comprises a first and a last reference media. The first reference media comprises one or more identifiable Ground Control Point, GCP. Each GCP is associated to a respective 2D or 3D coordinate. Each reference media follows the first reference media overlapping or encompassing the preceding reference media. The method further comprises generating the assessment media based on establishing respective links from each GCP of the first reference media to a corresponding point in the last reference media. The establishing of respective links comprising iteratively correlating, from the first reference media to the last reference media, sequentially pairwise reference media, so that each sequentially preceding reference media of a reference media pair has a known position relative to the sequentially following reference media of the reference media pair and so that the sequentially following reference media carries information relating to the 2D or 3D coordinates associated with each GCP, thereby linking the 2D or 3D coordinates associated with each GCP to corresponding 2D or 3D coordinates of the last reference media via a correlation chain.

By correlating the GCP 2D/3D coordinates to each reference media and thereby ensuring that each reference media obtains the same accuracy of 2D/3D coordinates as the accuracy of the GCPs, the assessment media enables a geospatial dataset to be compared to any of the reference media that overlaps with the geospatial dataset and evaluate the accuracy of the geospatial dataset to the accuracy of the GCPs.

According to some aspects, the assessment media being configured to enable determination of 2D and/or 3D coordinates of any subset of the assessment media to the same level of accuracy as the accuracy of the 2D or 3D coordinates of the GCPs based on the correlation chain.

According to some aspects, generating the assessment media further comprises traversing the correlation chain and determining, for each traversed step of the correlation chain, a residual error based on the relative known positions of each reference media pair associated with a traversed step, the residual errors relating to a geospatial error in each reference media with respect to the first reference media. By determining residual errors at each reference media, it is possible to correlate a media for which accuracy is to be assessed with any of the reference media, and then traverse the correlation chain back to the first reference media and accumulate the residual errors at each step, thereby propagating the accuracy of the GCPs from the first reference media to the assessed media by taking into account the residual errors at each step. According to some aspects, each reference media following the first reference media has a larger geographic extent than the preceding reference media. This enables building reference media with a large geospatial coverage with the same accuracy at which the GCPs are determined.

According to some aspects, the first reference media comprises a 2D image containing at least one identifiable GCP. According to some aspects, the 2D image comprises an image taken by a camera such as an aerial photography, or a drone-photo, or a photography from a hand-held camera. 2D images enable capturing a set of features that enables identification of the at least one GCP in a simple and efficient manner. 2D images enable identifying features of the GCPs using neural networks, such as convolutional neural networks, CNNs, trained to identify objects. In particular, a neural network can be trained to identify the presence and location of a GCP in a 2D image.

According to some aspects, the first reference media comprises a 3D model comprises the at least one identifiable GCP. By including the at least one identifiable GCP in the 3D model, synthetic views of the GCPs can be generated. The synthetic view of the at least one identifiable GCP can thereby enable registration between reference media having a corresponding viewpoint.

According to some aspects, the 3D model comprises a textured 3D model, or a point cloud with or without RGB colors, or a data set formed by LIDAR + photogrammetry reconstruction.

According to some aspects, any of the reference media following the first reference media comprises an aerial photography, or a drone-photo 2D, or stereo, or a photography from a hand-held camera, or a textured 3D model, or a point cloud with or without RGB colors, or a data set formed by LIDAR + photogrammetry reconstruction, or satellite imagery, or synthetic-aperture radar, SAR, imagery.

According to some aspects, iteratively correlating sequentially pairwise reference media comprises manually comparing a preceding reference media with the following reference media of a reference media pair.

According to some aspects, iteratively correlating sequentially pairwise reference media comprises registering a preceding reference media with the following reference media of a reference media pair. Registering sequentially pairwise reference media enables transferring the 2D and/or 3D coordinate precision of a preceding reference media to the next following reference media.

According to some aspects, iteratively correlating sequentially pairwise reference media comprises comparing an ortho-projected rendering of registering a preceding reference media with the following reference media of a reference media pair, wherein optionally also an ortho-projected rendering of the following reference media of a reference media pair is provided before the comparison.

According to some aspects, the method further comprises obtaining a 3D model of equipment used for obtaining the one or more GCP, wherein the 3D model is used by the first reference media.

The present disclosure also relates to a method for assessing accuracy of a geospatial dataset. The method comprises providing assessment media for use in assessing the accuracy of the geospatial dataset, said assessment media being obtained using the method for providing an assessment media for use in assessing accuracy of a geospatial dataset, as described above and below. The method further comprises correlating the geospatial dataset to an assessment media subset. The assessment media subset is selected from the provided assessment media, the assessment media subset overlapping or encompassing the geospatial dataset. The method also comprises assessing the accuracy of the geospatial dataset based on the correlation between the assessment media subset and the geospatial dataset and the correlation between the assessment media subset and the respective 2D or 3D coordinate of the one or more GCP. By establishing a correlation between the geospatial dataset and the one or more GCP, the difference between the current 2D and/or 3D coordinates of the geospatial dataset and the 2D and/or 3D coordinates of the geospatial dataset as predicted via the correlation chain from the one or more GCP to the geospatial dataset. The difference enables assessing the accuracy of the geospatial dataset.

According to some aspects, the geospatial dataset comprises a geo-referenced satellite image.

According to some aspects, the geospatial dataset comprises a geo-referenced 3D model.

The present disclosure further relates to corresponding computer program computer products and systems for assessing accuracy of a geospatial dataset having the same technical effects and advantages.

### BRIEF DESCRIPTION OF THE DRAWINGS

Figure 1 illustrates aspects of the method for providing an assessment media for use in assessing accuracy of a geospatial dataset;
Figure 2 illustrates a system for providing an assessment media for use in assessing accuracy of a geospatial dataset;
Figure 3 illustrates aspects of the method for assessing accuracy of a geospatial dataset;
Figures 4a and 4b illustrate examples of how the disclosed methods may be implemented and used; and
Figure 5 illustrates a system for assessing accuracy of a geospatial dataset.

### DETAILED DESCRIPTION

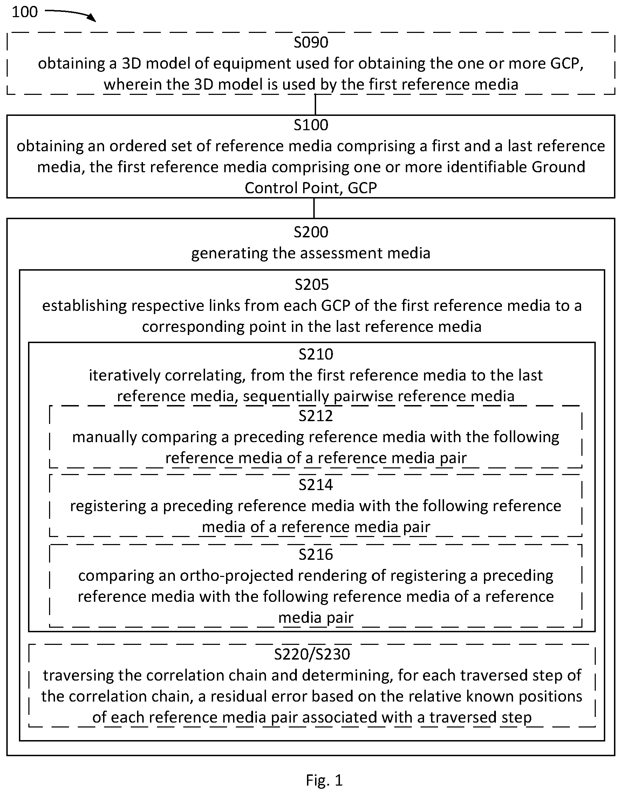

Figure 1 illustrates aspects of a method 100 for providing an assessment media for use in assessing accuracy of a geospatial dataset.

The main idea of the method is to insert a set of reference objects in a first reference media that can be clearly identified in said first reference media, with the reference objects having well known locations, said locations being determined with a desired high accuracy. By correlating the reference objects to identifiable features of the first reference media, the accuracy of the reference object locations (in 2D or 3D coordinates), can therefore be transferred to the rest of the first reference media comprising the reference objects. Once the first reference media has been determined to the same accuracy as the reference objects, other reference media overlapping the first reference media can be correlated with the first reference media via identifiable features that appear in both reference media. The overlapping reference media can thereby be determined to the same accuracy of the first reference media, which is already determined to the accuracy of the reference objects. This process can be repeated by having newly introduced reference media be correlated to reference media that has been determined to the same accuracy of the reference objects. An assessment media can thereby be generated by linking a set of reference media together through a correlation chain that allows each reference media in the set to have the same accuracy as the reference media comprising the reference objects.

Thus, the method 100 comprises obtaining S100 an ordered set of reference media. The ordered set comprises a first and a last reference media. The first reference media comprises one or more identifiable Ground Control Point, GCP. Each GCP is associated to a respective 2D or 3D coordinate. Each reference media following the first reference media overlaps or encompasses the preceding reference media. In other words, the ordering of the ordered set of reference media may be determined by how each reference media overlap and/or encompasses other reference media from the set of reference media.

According to some aspects, the method further comprises obtaining S090 a 3D model of equipment used for obtaining the one or more GCP, wherein the 3D model is used by the first reference media. Having a 3D model of the GCPs improves image registration when it is possible to register the first reference media with the 3D model, e.g. by projecting features of the first reference media onto the 3D model, or vice versa, or generating synthetic images of the 3D model and registering said synthetic images with the first reference media.

The method further comprises generating S200 the assessment media based on establishing respective links from each GCP of the first reference media to a corresponding point in the last reference media. The establishing of respective links comprises iteratively correlating S210, from the first reference media to the last reference media, sequentially pairwise reference media, so that each sequentially preceding reference media of a reference media pair has a known position relative to the sequentially following reference media of the reference media pair and so that the sequentially following reference media carries information relating to the 2D or 3D coordinates associated with each GCP, thereby linking the 2D or 3D coordinates associated with each GCP to corresponding 2D or 3D coordinates of the last reference media via a correlation chain.

According to some aspects, the assessment media is configured to enable determination of 2D and/or 3D coordinates of any subset of the assessment media to the same level of accuracy as the accuracy of the 2D or 3D coordinates of the GCPs based on the correlation chain.

According to some aspects, iteratively correlating S210 sequentially pairwise reference media comprises manually comparing S212 a preceding reference media with the following reference media of a reference media pair. For instance, each reference media can be compared S212 based on how they overlap each other. A manual comparison S212 can also be used to change the ordering of the ordered set of reference media, which can facilitate generation S200 of the assessment media. According to some aspects, iteratively correlating S210 sequentially pairwise reference media comprises registering S214 a preceding reference media with the following reference media of a reference media pair. According to some aspects, iteratively correlating S210 sequentially pairwise reference media comprises comparing S216 an ortho-projected rendering of registering a preceding reference media with the following reference media of a reference media pair, wherein optionally also an ortho-projected rendering of the following reference media of a reference media pair is provided before the comparison.

According to some aspects, generating S200 the assessment media further comprises traversing S220 the correlation chain and determining S230, for each traversed step of the correlation chain, a residual error based on the relative known positions of each reference media pair associated with a traversed step, the residual errors relating to a geospatial error in each reference media with respect to the first reference media. The residual errors can be accumulated such that each reference media can be associated with a corresponding set of residual errors with respect to the GCPs. This enables assessment of the accuracy of a geospatial dataset with respect to any of the reference media. For instance, if the assessment media comprises a set of overlapping images, the geospatial dataset can be assessed with respect to any of the images, since each image has a set of residual errors with respect to the GCPs.

By linking each reference media through the correlation chain, a region larger than covered by any of the individual reference media can by covered. For instance, by linking a reference media that overlaps or encompasses another reference media, the region covered by the union of the linked reference media is greater than that covered by either of the individual reference media, while simultaneously ensuring that the region covered by the of the linked reference media is described to a desired accuracy determined by the correlation with the GCPs via the correlation chain. Thus, according to some aspects, each reference media following the first reference media has a larger geographic extent than the preceding reference media. According to some aspects, each reference media following the first reference media overlaps with and extends beyond the region covered by the preceding reference media.

The first reference media may comprise either 2D and/or 3D data that indicates the one or more identifiable GCP. According to some aspects, the first reference media comprises a 2D image containing at least one identifiable GCP. According to some aspects, the 2D image comprises an image taken by a camera such as an aerial photography, a drone-photo or a photography from a hand-held camera. The 2D image taken this way ensures that the at least one GCP is clearly identifiable. The 2D image further enables correlating features comprised in the 2D image to similar features of another 2D image, possibly taken from another viewpoint and/or time-period. For instance, if the first reference media comprises a 2D image comprising at least one identifiable GCP and shows some terrain features, e.g. trees, the terrain features can be identified in another 2D image taken from a different viewpoint and the 2D and/or 3D coordinates of the other 2D image can be determined, e.g. via image registration.

Optionally, the first reference media comprises a 3D model. According to some aspects, the first reference media comprises a 3D model comprising the at least one identifiable GCP. According to some aspects, the 3D model comprises a textured 3D model and/or a point cloud with and/or without RGB colors or a data set formed by LIDAR + photogrammetry reconstruction. A 3D model allows registration to either the 3D model and/or synthetic images generated based on the 3D model. Further, from the first reference media comprising a 3D model, the assessment media can be generated S200 comprising a 3D model by gradually adding to the 3D model of the first reference media when iteratively correlating S210, from the first reference media to the last reference media, sequentially pairwise reference media. For instance, starting from the 3D model of the first reference media, the reference media following the first reference media can be registered to the 3D model of the first reference media, which enables the 3D model of the first reference media to be extended.

According to some aspects, any of the reference media following the first reference media comprises an aerial photography and/or a drone-photo 2D or stereo and/or a photography from a hand-held camera and/or a textured 3D model and/or a point cloud with or without RGB colors and/or a data set formed by LIDAR + photogrammetry reconstruction and/or satellite imagery and/or synthetic-aperture radar, SAR, imagery.

The present disclosure further relates to a computer program product comprising a non-transitory computer-readable storage medium having thereon a computer program comprising program instructions, the computer program being loadable into a processor and configured to cause the processor to perform the method for providing an assessment media for use in assessing accuracy of a geospatial dataset according to any of the preceding claims.

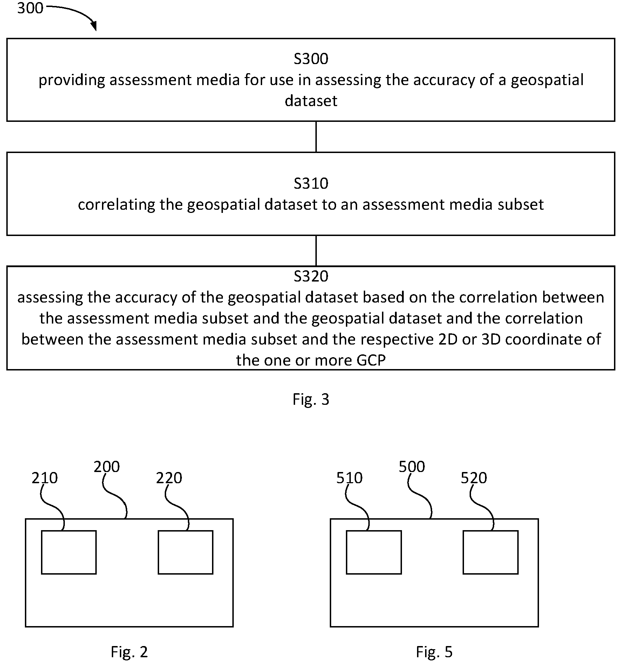

Figure 2 illustrates aspects of a system 200 for providing an assessment media for use in assessing accuracy of a geospatial dataset. The system comprising a processor 210 and a memory 220. The memory comprises a computer program being loadable into the processor and configured to cause the processor to perform the method for providing an assessment media for use in assessing accuracy of a geospatial dataset, as described above and below.

Figure 3 illustrates aspects of the method 300 for assessing accuracy of a geospatial dataset. The method comprises providing S300 assessment media for use in assessing the accuracy of the geospatial dataset, said assessment media being obtained using the method (100) according to any of the preceding claims. The method 300 further comprises correlating S310 the geospatial dataset to an assessment media subset. The assessment media subset is selected from the provided assessment media, the assessment media subset overlapping or encompassing the geospatial dataset. The method 300 also comprises assessing S320 the accuracy of the geospatial dataset based on the correlation between the assessment media subset and the geospatial dataset and the correlation between the assessment media subset and the respective 2D or 3D coordinate of the one or more GCP.

According to some aspects, the geospatial dataset comprises a geo-referenced satellite image. According to some aspects, the geospatial dataset comprises a geo-referenced 3D model.

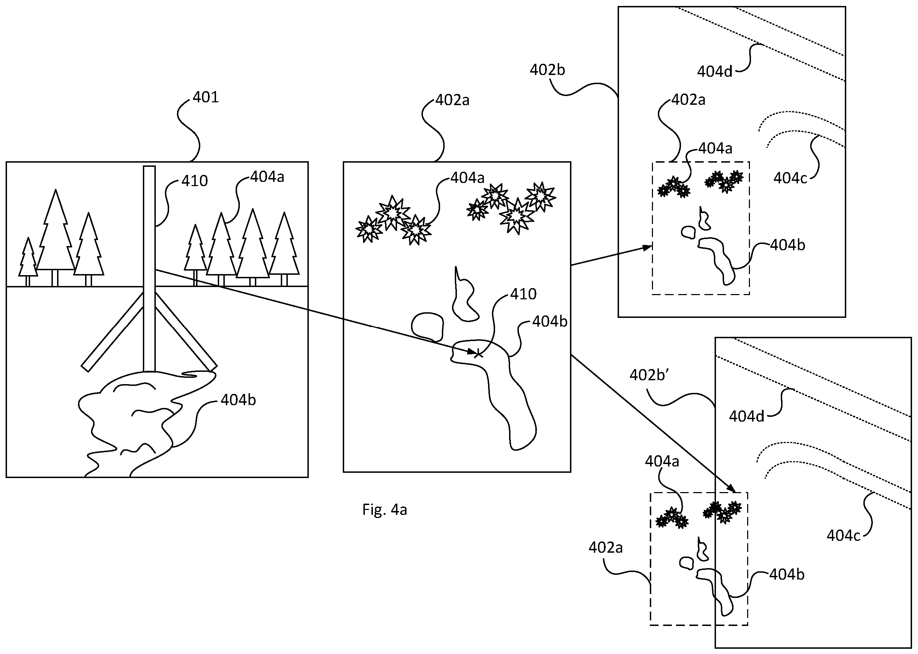

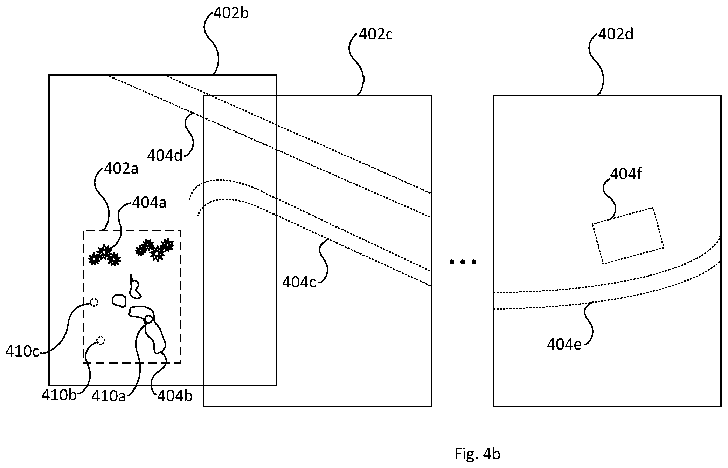

Figures 4a and 4b illustrate examples of how the disclosed methods 100, 300 may be implemented and used. The method 100 for providing an assessment media for use in assessing accuracy of a geospatial dataset comprises obtaining S100 an ordered set of reference media. The ordered set comprises a first and a last reference media. In the illustrated example, the first reference media is illustrated by the 2D image 402a, which could be an ortho-projection of a 3D model. The last reference media is illustrated by the two 2D image options that either encompasses 402b the first reference media 402a or overlaps 402b' the first reference media 402a. The first reference media comprises one or more identifiable Ground Control Point, GCP 410. For illustrative purposes, only one GCP 410 is shown, but more than one GCP 410 may be used. According to some aspects, the first reference media comprises a 2D image containing at least one identifiable GCP. According to some aspects, the 2D image comprises an image taken by a camera such as an aerial photography and/or a drone-photo and/or a photography from a hand-held camera.

Each GCP is associated to a respective 2D or 3D coordinate. An advantage of using GCPs is that the geolocation of each GCP 410 can determined with high precision. By matching features 404a, 404b in images 401 of the GCPs with features 404a, 404b of the first reference media, as well as the location of the identifiable GCP 410 in the first reference media 402, the precision of the first reference media 402a can be determined to the same accuracy as the GCPs.

If a 3D model is desired for the first reference media 402a, respective 3D models of the GCPs can be modelled or obtained by taking a set of images 401 of the GCPs from multiple angles and generate a 3D model of the GCPs using 3D reconstruction. In other words, according to some aspects, the method further comprises obtaining S090 a 3D model of equipment used for obtaining the one or more GCP, wherein the 3D model is used by the first reference media. According to some aspects, the first reference media comprises a 3D model comprising the at least one identifiable GCP. According to some aspects, the 3D model comprises a textured 3D model and/or a point cloud with or without RGB colors and/or a data set formed by LIDAR + photogrammetry reconstruction.

Each reference media following the first reference media overlaps or encompasses the preceding reference media. In the illustrated example, there is only one reference media pair in the ordered set of reference media, namely the first 402a and last 402b, 402b' reference media. In image 402b, the reference media following the first reference media, here being the last reference media, encompasses the first reference media. Thus, according to some aspects, each reference media following the first reference media has a larger geographic extent than the preceding reference media. In image 402b', there is only an overlap. An important technical effect and advantage of the disclosed method is hereby illustrated - the images following the first reference media may not have the same resolution as the first reference media and may not be able to discern the GCPs if they are present. However, by correlating, e.g. by registering, the reference media following the first reference media to the first reference media, the precision of the 2D and/or 3D coordinates of the first reference media can be propagated or transferred to the following reference media. According to some aspects, any of the reference media following the first reference media comprises at least one of: an aerial photography, a drone-photo 2D or stereo, a photography from a hand-held camera, a textured 3D model, a point cloud with or without RGB colors, a data set formed by LIDAR + photogrammetry reconstruction, satellite imagery, synthetic-aperture radar, SAR, imagery.

By repeating this process, an assessment media covering an ever-increasing region can be generated.

Thus, the method 100 further comprises generating S200 the assessment media based on establishing S205 respective links from each GCP of the first reference media to a corresponding point in the last reference media, said establishing of respective links comprising iteratively correlating S210, from the first reference media to the last reference media, sequentially pairwise reference media, so that each sequentially preceding reference media of a reference media pair has a known position relative to the sequentially following reference media of the reference media pair and so that the sequentially following reference media carries information relating to the 2D or 3D coordinates associated with each GCP, thereby linking the 2D or 3D coordinates associated with each GCP to corresponding 2D or 3D coordinates of the last reference media via a correlation chain. According to some aspects, the assessment media being configured to enable determination of 2D and/or 3D coordinates of any subset of the assessment media to the same level of accuracy as the accuracy of the 2D or 3D coordinates of the GCPs based on the correlation chain. According to some aspects, generating S200 the assessment media further comprises traversing S220 the correlation chain and determining S230, for each traversed step of the correlation chain, a residual error based on the relative known positions of each reference media pair associated with a traversed step, the residual errors relating to a geospatial error in each reference media with respect to the first reference media. According to some aspects, iteratively correlating S210 sequentially pairwise reference media comprises manually comparing S212 a preceding reference media with the following reference media of a reference media pair. According to some aspects, iteratively correlating S210 sequentially pairwise reference media comprises registering S214 a preceding reference media with the following reference media of a reference media pair. According to some aspects, iteratively correlating S210 sequentially pairwise reference media comprises comparing S216 an ortho-projected rendering of registering a preceding reference media with the following reference media of a reference media pair, wherein optionally also an ortho-projected rendering of the following reference media of a reference media pair is provided before the comparison.

Figure 4b further illustrates how a longer correlation chain is formed, as well as how the accuracy of a geospatial dataset can be assessed. In Figure 4b, the last reference media is not image 402b, but image 402d. The set of images 402c-402d are correlated with the GCPs 410a-c of the first reference media 402a by pairwise correlation between consecutive images, e.g. image 402c is correlated to image 402b via the overlap of the two images. For instance, the images 402c and 402b can be registered to each other via common features 404c. Subsequent images can be correlated in the same manner to form the correlation chain, ending with the final reference media 402d.

The method 300 for assessing accuracy of a geospatial dataset works along the same principle as the assessment media is generated. Specifically, the geospatial dataset is treated as another reference media that is to be added to the correlation chain. The geospatial dataset is compared to the assessment media to determine where there is overlap and the correlation with the assessment media is determined. If the assessment media comprises a 3D model, the geospatial dataset can be correlated immediately to the 3D model, e.g. by registration. If the assessment media comprises a set of ordered 2D images, the image(s) with the most overlap with the geospatial are determined and the geospatial dataset is treated like a "reference media" that is to be correlated with the overlapping images. The correlation chain can be traversed from the overlapping reference media images to the first reference media and the difference between what the correlation chain, e.g. through accumulated residual errors, predicts for the geospatial dataset and the current geospatial coordinates of the geospatial dataset can be determined. The difference in geospatial coordinates relates to the accuracy of the geospatial dataset.

In short, the method 300 for assessing accuracy of a geospatial dataset comprises providing S300 assessment media for use in assessing the accuracy of the geospatial dataset, said assessment media being obtained using the method 100 according to any of the preceding claims. The method further comprises correlating S310 the geospatial dataset to an assessment media subset, the assessment media subset being selected from the provided assessment media, the assessment media subset overlapping or encompassing the geospatial dataset, and assessing S320 the accuracy of the geospatial dataset based on the correlation between the assessment media subset and the geospatial dataset and the correlation between the assessment media subset and the respective 2D or 3D coordinate of the one or more GCP. According to some aspects, the geospatial dataset comprises a geo-referenced satellite image. According to some aspects, the geospatial dataset comprises a geo-referenced 3D model. The present disclosure further relates to a computer program product for assessing accuracy of a geospatial dataset, the computer program product comprising a non-transitory computer-readable storage medium having thereon a computer program comprising program instructions, the computer program being loadable into a processor and configured to cause the processor to perform the method for assessing accuracy of a geospatial dataset as described above and below.

Figure 5 illustrates a system 500 for assessing accuracy of a geospatial dataset. The system 500 comprises a processor 510 and a memory 520. The memory comprises a computer program comprising program instructions, the computer program being loadable into the processor and configured to cause the processor to perform the method for assessing accuracy of a geospatial dataset according as described above and below.

## Claims

1. A method (100) for providing an assessment media for use in assessing accuracy of a geospatial dataset, said method comprising
obtaining (S100) an ordered set of reference media, the ordered set comprising a first and a last reference media, the first reference media comprising one or more identifiable Ground Control Point, GCP, each GCP being associated to a respective 2D or 3D coordinate, each reference media following the first reference media overlapping or encompassing the preceding reference media, and
generating (S200) the assessment media based on establishing (S205) respective links from each GCP of the first reference media to a corresponding point in the last reference media, said establishing of respective links comprising iteratively correlating (S210), from the first reference media to the last reference media, sequentially pairwise reference media, so that each sequentially preceding reference media of a reference media pair has a known position relative to the sequentially following reference media of the reference media pair and so that the sequentially following reference media carries information relating to the 2D or 3D coordinates associated with each GCP, thereby linking the 2D or 3D coordinates associated with each GCP to corresponding 2D or 3D coordinates of the last reference media via a correlation chain.

2. The method according to claim 1, wherein the assessment media being configured to enable determination of 2D and/or 3D coordinates of any subset of the assessment media to the same level of accuracy as the accuracy of the 2D or 3D coordinates of the GCPs based on the correlation chain.

3. The method according to claim 1 or 2, wherein generating (S200) the assessment media further comprises traversing (S220) the correlation chain and
determining (S230), for each traversed step of the correlation chain, a residual error based on the relative known positions of each reference media pair associated with a traversed step, the residual errors relating to a geospatial error in each reference media with respect to the first reference media.

4. The method according to any of the preceding claims, wherein each reference media following the first reference media has a larger geographic extent than the preceding reference media.

5. The method according to any of the preceding claims, wherein the first reference media comprises a 2D image containing at least one identifiable GCP, wherein optionally the 2D image comprises an image taken by a camera such as
an aerial photography or
a drone-photo or
a photography from a hand-held camera.

6. The method according to any of the preceding claims, wherein the first reference media comprises a 3D model comprising the at least one identifiable GCP.

7. The method according to claim 6 wherein the 3D model comprises a
a textured 3D model or
a point cloud with or without RGB colors or
a data set formed by LIDAR + photogrammetry reconstruction.

8. The method according to any of the preceding claims, wherein any of the reference media following the first reference media comprises
• an aerial photography or
• a drone-photo 2D or stereo or
• a photography from a hand-held camera or
• a textured 3D model or
• a point cloud with or without RGB colors or
• a data set formed by LIDAR + photogrammetry reconstruction,
• satellite imagery,
• synthetic-aperture radar, SAR, imagery.

9. The method according to any of the preceding claims, wherein iteratively correlating (S210) sequentially pairwise reference media comprises manually comparing (S212) a preceding reference media with the following reference media of a reference media pair and/or registering (S214) a preceding reference media with the following reference media of a reference media pair.

10. The method according to any of the preceding claims, wherein iteratively correlating (S210) sequentially pairwise reference media comprises comparing (S216) an ortho-projected rendering of registering a preceding reference media with the following reference media of a reference media pair, wherein optionally also an ortho-projected rendering of the following reference media of a reference media pair is provided before the comparison.

11. A computer program product comprising a non-transitory computer-readable storage medium having thereon a computer program comprising program instructions, the computer program being loadable into a processor and configured to cause the processor to perform the method for providing an assessment media for use in assessing accuracy of a geospatial dataset according to any of the preceding claims.

12. A system (200) for providing an assessment media for use in assessing accuracy of a geospatial dataset, the system comprising a processor (210) and a memory (220), the memory comprising a computer program being loadable into the processor and configured to cause the processor to perform the method for providing an assessment media for use in assessing accuracy of a geospatial dataset according to any of claims 1-10.

13. A method (300) for assessing accuracy of a geospatial dataset comprising
providing (S300) assessment media for use in assessing the accuracy of the geospatial dataset, said assessment media being obtained using the method (100) according to any of the preceding claims,
correlating (S310) the geospatial dataset to an assessment media subset, the assessment media subset being selected from the provided assessment media, the assessment media subset overlapping or encompassing the geospatial dataset, and
assessing (S320) the accuracy of the geospatial dataset based on the correlation between the assessment media subset and the geospatial dataset and the correlation between the assessment media subset and the respective 2D or 3D coordinate of the one or more GCP.

14. A computer program product for assessing accuracy of a geospatial dataset, the computer program product comprising a non-transitory computer-readable storage medium having thereon a computer program comprising program instructions, the computer program being loadable into a processor and configured to cause the processor to perform the method for assessing accuracy of a geospatial dataset according to claim 13.

15. A system (500) for assessing accuracy of a geospatial dataset, the system (500) comprising a processor (510) and a memory (520), the memory comprising a computer program comprising program instructions, the computer program being loadable into the processor and configured to cause the processor to perform the method for assessing accuracy of a geospatial dataset according to claim 13.
